Europäisches Patentamt

**European Patent Office**

**Office européen des brevets**

(11) Numéro de publication : **0 069 185**
**B1**

(12) **FASCICULE DE BREVET EUROPÉEN**

(45) Date de publication du fascicule du brevet :
**09.10.85**

(51) Int. Cl.⁴ : **G 02 B 26/00**

(21) Numéro de dépôt : **81810273.3**

(22) Date de dépôt : **06.07.81**

(54) **Dispositif de commande photo-électrique.**

(43) Date de publication de la demande :
**12.01.83 Bulletin 83/02**

(45) Mention de la délivrance du brevet :
**09.10.85 Bulletin 85/41**

(84) Etats contractants désignés :
**AT BE CH DE FR GB IT LI LU NL SE**

(56) Documents cités :
**EP-A- 0 000 857**
**DE-A- 2 841 848**
**FR-A- 2 180 185**
**US-A- 4 071 753**
**US-A- 4 204 742**
**APPLIED OPTICS, Vol. 19, No. 1, janvier 1980 W.B. SPILLMAN, JR. et al. "Frustrated-total-internal-reflection multimode fiber-optic hydrophone" pages 113 à 117**

(73) Titulaire : **BATTELLE MEMORIAL INSTITUTE**
**7 route de Drize**
**CH-1227 Carouge/Genève (CH)**

(72) Inventeur : **Harmer, Allan Lewis**
**13, Bernex-en-Combes**
**CH-1233 Bernex/Genève (CH)**

(74) Mandataire : **Dousse, Blasco et al**
**7, route de Drize**
**CH-1227 Carouge/Genève (CH)**

Jouve, 18, rue St-Denis, 75001 Paris, France

## Description

La présente invention se rapporte à un dispositif de commande photo-électrique comprenant une source de lumière, un photodétecteur, un interrupteur actionné par le photodétecteur, dont l'état enclenché/déclenché dépend d'un seuil de lumière détecté par le photodétecteur, et un organe d'entraînement solidaire d'une surface réflectrice de lumière qui peut être déplacée entre deux positions limites dans l'une desquelles la lumière est dirigée vers le photodétecteur et dans l'autre desquelle elle est dirigée vers un élément d'affichage.

Il a déjà été proposé un dispositif de ce genre dans le brevet EP 0 000 857, comprenant un bouton poussoir dont l'extrémité porte la surface réflectrice de lumière, disposée à 45° par rapport à l'axe longitudinal du poussoir qui est réalisé en un matériau transparent. Ce poussoir est agencé pour amener la surface réflectrice vis-à-vis d'une extrémité d'une fibre optique dont l'autre extrémité est associée à la source de lumière. Dans cette position, la surface réflectrice dirige la lumière axialement à travers le poussoir jusqu'à sa face d'extrémité où elle est visible, cette face constituant l'élément d'affichage.

La perte d'intensité lumineuse d'un tel dispositif est relativement élevée notamment en raison de la distance entre la surface réflectrice et l'extrémité de la fibre optique vers laquelle la lumière est dirigée. Le déplacement de l'organe de commande doit avoir une amplitude suffisante pour déplacer la surface réflectrice de la position dans laquelle elle intercepte les rayons lumineux à une position dans laquelle elle s'écarte de leur trajectoire. Un tel dispositif comporte nécessairement un certain nombre d'éléments, ce qui suppose des opérations de montage d'autant plus longues que ces éléments sont nombreux. On peut encore relever que, par sa conception, ce dispositif ne se prête pas à une exécution extra-plate, ce qui peut constituer un inconvénient dans le cas de certaines applications.

On a déjà proposé dans « Applied optics » Vol. 19 No 1 du 1er janvier 1980 pages 113-117, un dispositif pour transformer une pression acoustique en signal optique analogique, basé sur le principe de l'atténuation de la réflection interne totale. A cet effet, on utilise deux fibres optiques dont les extrémités sont coupées selon deux biseaux formant des angles supplémentaires et soumis à des ondes de pression susceptibles de faire varier l'écartement entre ces biseaux, et capables de réagir à des pressions minimum de 62 dB par rapport à 1 $\mu$Pa à 500 Hz. Un tel dispositif a par ailleurs permis de détecter des déplacements statiques aussi petits que $4,8 \times 10^{-3}$ Å.

Le but de la présente invention est d'adapter ce principe à un dispositif de commande photo-électrique à affichage du type sus-mentionné de manière à pouvoir remédier dans une grande mesure aux inconvénients inhérents aux dispositifs de commande de ce type.

A cet effet, la présente invention a pour objet un dispositif de commande photoélectrique comprenant une source de lumière, un photodétecteur, un interrupteur actionné par le photodétecteur, dont l'état enclenché/déclenché dépend d'un seuil d'intensité lumineuse détectée par le photodétecteur, et un organe d'actionnement solidaire d'une surface réflectrice de lumière qui peut être déplacée entre deux positions limites dans l'une desquelles la lumière issue de la source est dirigée vers le photodétecteur et dans l'autre desquelles elle est dirigée vers un élément d'affichage. Ce dispositif de commande est caractérisé par le fait que ladite surface réflectrice est formée par un biseau qui est ménagé à l'extrémité d'une fibre optique solidaire dudit organe d'entraînement et qui présente une fenêtre pour recueillir la lumière provenant de ladite surface réflectrice lorsqu'elle occupe la seconde desdites positions limites et par le fait que le photodétecteur est associé à une extrémité d'une seconde fibre optique dont l'autre extrémité est biseautée et forme un angle avec l'axe de la fibre optique qui est le supplément de l'angle correspondant du biseau ménagé sur l'autre fibre optique, ces deux fibres optiques étant coaxiales l'une à l'autre dans la première desdites positions limites, les deux biseaux étant alors parallèles et mutuellement en contact optique.

L'un des avantages de ce dispositif est l'intégration de la surface réflectrice et de la fenêtre d'affichage à la fibre optique et à son organe d'actionnement. Il en découle une réduction du nombre de pièces et la possibilité de réaliser un dispositif très plat, les fibres optiques étant parallèles à la surface d'affichage et de commande. Compte tenu de la sensibilité de la transmission optique à l'interface des fibres biseautées, le déplacement, nécessaire pour distinguer les deux états définis par un seuil de transmission lumineuse entre les fibres optiques d'une part et une intensité lumineuse réfléchie à travers la fenêtre d'affichage suffisante pour réaliser l'affichage d'autre part, est extrêmement faible.

Le dessin annexé illustre, schématiquement et à titre d'exemple, une forme d'exécution du dispositif de commande photo-électrique objet de l'invention.

La figure 1 est une vue en perspective de ce dispositif.

Les figures 2 et 3 sont des diagrammes explicatifs.

Le dispositif illustré comporte une première fibre optique 1 noyée dans un support 2, relié à un bâti 3 par un axe d'articulation 4 situé à une extrémité de ce support 2. L'autre extrémité de ce support présente une face biseautée 5 coplanaire à l'extrémité de la fibre optique 1. Tout ce support à l'exception de la face biseautée 5 est recouvert d'un revêtement noir pour protéger la fibre optique de la lumière ambiante. Un dégagement 6 est ménagé dans la face externe du support 2 jusqu'au niveau de la fibre optique 1 et sert de fenêtre permettant d'observer de l'extérieur les rayons lumineux qui sont renvoyés à travers la surface de la fibre optique 1 par son extrémité biseautée jouant le rôle de prisme. L'autre extrémité de cette fibre optique 1 est connectée à une diode électroluminescente LED servant de source de lumière.

Une seconde fibre optique 7 est noyée dans un support 8 de nylon noir, fixé au bâti 3 dans le prolongement du support 2. L'extrémité de ce support 8 adjacente au support 2 présente une face 9 biseautée coplanaire à l'extrémité de la fibre optique 7 et formant avec l'axe de la fibre 7 un angle supplémentaire à celui que la face biseautée 5 fait avec la fibre optique 1 quand ces fibres sont coaxiales.

En fait, en position de repos, ces fibres ne sont pas coaxiales et les faces biseautées 5 et 9 sont séparées l'une de l'autre. Un ressort lame 10, fixé au support 2, présente une partie arquée qui appuie contre le bâti 3 et se termine par une partie plane qui appuie contre la face inférieure du support 2 et dépasse de l'extrémité de ce support pour venir buter, en position de repos dans un dégagement 11 ménagé à l'extrémité du support fixe 8. L'autre extrémité de la fibre optique 7 aboutit à un photodétecteur PD.

La diode électroluminescente LED envoye de la lumière à travers la fibre optique 1. Lorsque celle-ci est dans la position illustrée, sa face d'extrémité biseautée jouant le rôle de prisme, réfléchit la lumière qui sort à travers la fenêtre formée par le dégagement 6 du support 2.

Lorsqu'une pression est exercée sur le support 2, celui-ci bascule autour de son axe d'articulation 4 jusqu'à ce que sa face biseautée 5 rencontre la face biseautée 9 du support fixe 8. Comme les extrémités des fibres optiques adjacentes à ces faces biseautées sont coplanaires à ces faces respectives 5 et 9, elles viennent en contact de sorte que la majeur partie de la lumière envoyée par la diode électroluminescente LED à travers la fibre optique 1 est transmise dans la fibre optique 7 et est reçue par le photodétecteur PD, qui est destiné à actionner un interrupteur (non représenté). Dès que la pression cesse d'être exercée sur le support 2, le ressort lame 10 le fait basculer dans la position illustrée et la face biseautée située à l'extrémité de la fibre optique 1 renvoie les rayons lumineux à travers le dégagement 6.

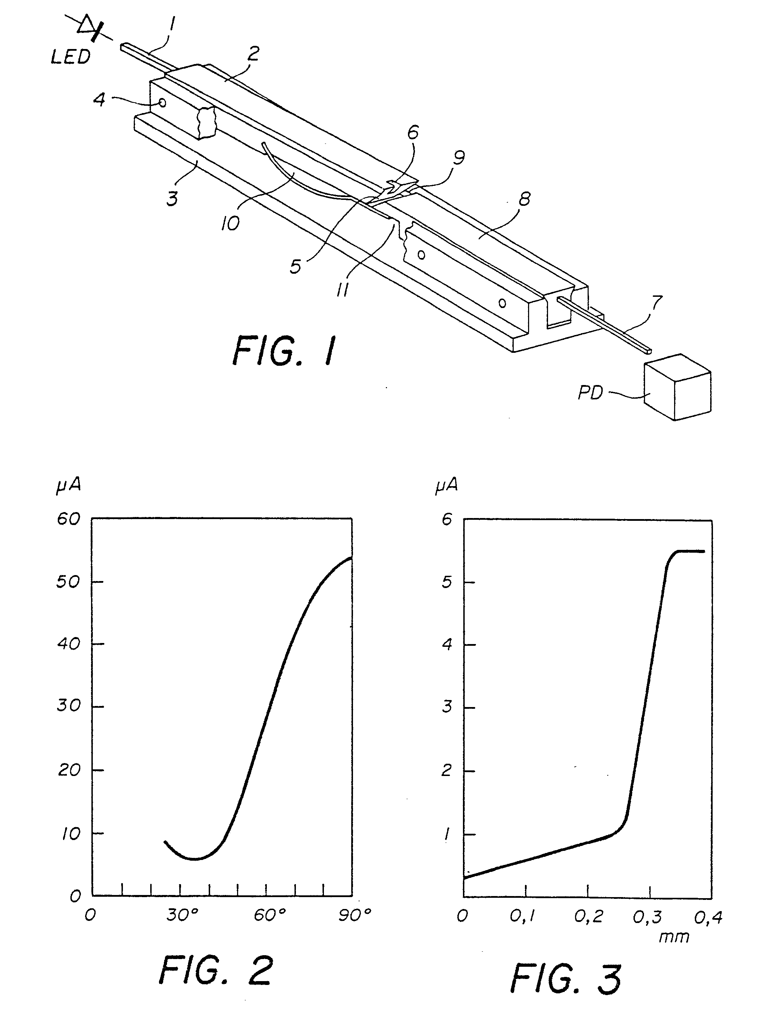

Le diagramme de la fig. 2 illustre l'intensité de lumière transmise d'une fibre à l'autre lorsqu'elles sont adjacentes, en fonction de l'angle de leurs faces biseautées. On constate que c'est avec un angle de 35° que la transmission est la plus faible. Bien entendu, pour un dispositif de commande photo-électrique à affichage, l'angle ne peut guère être choisi différent de 45°, mais on verra que, même si cet angle est proche des conditions minimum de transfert, le niveau de signal obtenu est sensiblement plus élevé que dans le cas des dispositifs à prisme indépendant.

Des essais ont été réalisés à l'aide du dispositif décrit en utilisant pour la fibre optique 1 associée à la diode électroluminescente LED une fibre de section carrée de 1 mm de côté et pour la fibre optique associée au photo-détecteur une fibre de section carrée de 0,7 mm de côté. Les extrémités adjacentes de ces deux fibres optiques présentent chacune une face biseautée à 45°. La diode électroluminescente utilisée est du type ESBR 5501 de la firme Stanley (Japon) et alimentée par un courant de 20 mA. La photodiode utilisée est du type BPW20. Lorsque les faces biseautées des fibres optiques sont pressées l'une contre l'autre avec une force inférieure à 300 g (1 g = 0,009 81 N) le niveau du signal capté par la photodiode PD est de 3,0 µA. Comparativement le niveau de signal est de 0,28 µA avec un dispositif à prisme indépendant des fibres. La perte due au couplage donnée en dB = 10 log ($I_0/I$) est de 2,4 dans le cas du dispositif décrit alors qu'elle s'élève à 6,7 avec le prisme indépendant. La sensibilité à la lumière ambiante par rapport au signal transmis à la photodiode lorsque les faces biseautées sont adjacentes est de − 36 dB dans le cas du dispositif selon l'invention et de − 31 dB avec le prisme indépendant. Enfin, l'amplitude du déplacement de l'organe de commande est de 0,08 mm dans le cas de la fibre à prisme intégré et de 0,6 mm dans l'autre cas.

Il apparaît de ces tests comparatifs, qu'une amélioration sensible des performances est obtenue grâce au dispositif dans lequel le prisme est intégré à la fibre et ceci pour un déplacement de l'organe d'actionnement très considérablement réduit.

Pour améliorer la transmission de lumière entre les fibres optiques, une couche de matière plastique à base de silicone, Silgard 182, de 20 µm d'épaisseur a été utilisée pour revêtir la face biseautée de la fibre optique 7. Cette couche relativement tendre sert à absorber les irrégularités microscopiques au niveau de l'état de surface des faces biseautées de ces fibres. Cette mesure permet d'obtenir déjà une bonne transmission optique avec une force de 100 g (1 g = 0,009 81 N) avec une perte optique de 1,3 dB.

Des essais d'usure ont été réalisés après 1,3 millions de cycles d'actionnement du dispositif. Ces essais n'ont permis de relever aucune détérioration au contraire, on a même relevé une légère augmentation de transmission provenant de l'usure de la couche de Silgard.

La lumière transmise lorsque les faces biseautées des fibres sont séparées est du même ordre de grandeur que le courant noir du photodétecteur, ce qui prouve que le dispositif a un rapport élevé entre l'état enclenché et déclenché.

La sensibilité à la lumière ambiante a été mesurée avec une ampoule tugstène de 100 W à 1 mètre de distance. Il s'est révélé que la lumière ambiante ne représente au plus que 30 % du courant noir du photodétecteur PD et est un facteur 2 500 fois inférieur au signal transmis lorsque les faces biseautées des fibres sont pressées l'une contre l'autre. On ne constate aucune variation de sensibilité à la lumière ambiante après le test d'usure.

Le diagramme de la fig. 3 illustre la variation du signal en fonction du déplacement de l'extrémité de la fibre optique mobile 1. On voit que le déplacement correspondant aux 0,5 mm précédant le contact des deux faces obliques ne provoque qu'une augmentation d'environ 20 % du signal lumineux transmis. Ensuite le signal augmente rapidement à 100 % pour 0,08 mm de déplacement. On ne relève pas d'hystérèse, c'est-à-dire pas de différence dans le niveau du signal entre le déplacement de la fibre 1 consécutif à une pression exercée sur le support 2 et au déplacement consécutif au relachement de cette pression.

Les essais réalisés entre + 60 °C et − 25 °C ont révélé une perte de 20 % dans le signal transmis à − 25 °C qui est probablement dû à un durcissement de la couche de Silgard. Les effets de la vitesse d'actionnement montrent qu'au-dessus de 2,5 Hz le signal transmis commence à diminuer pour atteindre la moitié de sa valeur à 10 Hz.

**Revendications**

1. Dispositif de commande photo-électrique comprenant une source de lumière (LED), un photodétecteur (PD), un interrupteur actionné par le photodétecteur (PD), dont l'état enclenché/déclenché dépend d'un seuil d'intensité lumineuse détectée par le photodétecteur (PD), et un organe d'actionnement solidaire d'une surface réflectrice de lumière (5) qui peut être déplacée entre deux positions limites dans l'une desquelles la lumière issue de la source (LED) est dirigée vers le photodétecteur (PD) et dans l'autre desquelles elle est dirigée vers un élément d'affichage, caractérisé par le fait que ladite surface réflectrice (5) est formée par un biseau qui est ménagé à l'extrémité d'une fibre optique (1) solidaire dudit organe d'entraînement et qui présente une fenêtre (6) pour recueillir la lumière provenant de ladite surface réflectrice (5) lorsqu'elle occupe la seconde desdites positions limites et par le fait que le photodétecteur (PD) est associé à une extrémité d'une seconde fibre optique (7) dont l'autre extrémité est biseautée et forme un angle avec l'axe de la fibre optique (7) qui est le supplément de l'angle correspondant du biseau ménagé sur l'autre fibre optique (1), ces deux fibres optiques (1, 7) étant coaxiales l'une à l'autre dans la première desdites positions limites, les deux biseaux étant alors parallèles et mutuellement en contact optique.

2. Dispositif selon la revendication 1, caractérisé par le fait qu'au moins un desdits biseaux est recouvert d'un revêtement en un matériau transparent plus tendre que le matériau formant lesdites fibres.

3. Dispositif selon la revendication 1, caractérisé par le fait qu'une portion de chaque fibre optique adjacente à leurs biseaux respectifs est solidaire d'un support (2) allongé associé à chacun des moyens de positionnement pour placer ces supports dans le prolongement l'un de l'autre dans la première desdites positions limites, l'un de ces supports étant articulé autour d'un axe transversal (4) éloigné de son extrémité adjacente à l'autre support, des moyens de rappel élastique (10) étant associé à ce support articulé (2) pour tendre à le ramener constamment dans l'une desdites positions limites.

**Claims**

1. Photo-electric control device comprising a light source (LED) a photodetector (PD), a switch driven by the photodetector (PD) whose on/off state depends on a luminous intensity thereshold detected by the photodetector (PD), and a driving element integral with a light reflective surface (5) which can be displaced between two end-positions in one of which the light from the source (LED) is directed toward the photodetector (PD) and in the other one it is directed toward a display element, characterized in that said reflective surface (5) is formed by a beveled end of an optical fiber (1) integral with said driving element and which is provided with a window (6) to collect the light coming from said reflective surface (5) when it is positioned in the second of said end-positions, and in that the photodetector (PD) is associated with one end of a second optical fiber (7) whose other end is beveled and forms an angle with the axis of this optical fiber (7) which is the supplement of the corresponding angle of the bevel provided on the other optical fiber (1), these two optical fibers (1, 7) being co-axial to one another in the first of said end-positions, the two bevels being then parallel and in mutual optical contact.

2. Device according to claim 1, characterized in that at least one of the bevels is coated with a transparent coating material softer than the material of said fibers.

3. Device according to claim 1, characterized in that a portion of each optical fiber adjacent to their respective bevel is integral with an elongated supporting member (2) coupled with each of the positionning means for placing these supporting members in axial registration to one another in the first of said end-positions, one of said supporting members being journalled around a transverse axle (4) distant from its end adjacent to the other supporting member, elastic return means being associated with this journalled supporting member to constantly pulling it toward one of said end-positions.

**Patentansprüche**

1. Photoelektrische Steuervorrichtung, die eine Lichtquelle (LED), einen Photodetektor (PD), einen vom Photodetektor (PD) betätigten Unterbrecher, dessen Sperr-/Auslösezustand von einer vom Photodetektor (PD) festgestellten Lichtintensitätsschwelle abhängt, und ein Betätigungsorgan umfaßt, das einstückig mit einer Lichtreflexionsfläche (5) ist, die zwischen zwei Grenzstellungen bewegt werden kann, wobei in der einen das von der Quelle (LED) ausgesandte Licht gegen den Photodetektor (PD) gerichtet ist und in der anderen gegen ein Anzeigegerät, dadurch gekennzeichnet, daß die Reflexionsfläche (5) durch eine Abschrägung gebildet ist, die am Ende einer mit dem Mitnehmerorgan einstückigen optischen Faser (1) angeordnet ist, und die ein Fenster (6) aufweist, um das von der Reflexionsfläche (5) ausgehende Licht einzufangen, wenn diese die zweite Grenzstellung einnimmt, und daß der Photodetektor (PD) mit einem Ende einer zweiten optischen Faser (7) in Verbindung ist, deren anderes Ende abgeschrägt ist und mit der Achse der optischen Faser (7) einen Winkel bildet, der supplementär zu dem korrespondierenden Winkel der auf der anderen optischen Faser (1) angebrachten Abschrägung ist, wobei die beiden optischen Fasern (1, 7) in der ersten Grenzstellung koaxial liegen und so die beiden Abschrägungen parallel und in gegenseitigem optischen Kontakt sind.

2. Vorrichtung nach Anspruch 1, dadurch gekennzeichnet, daß zumindest eine der Abschrägungen mit einem Überzug aus transparentem Material bedeckt ist, das weicher als das die Fasern bildende Material ist.

3. Vorrichtung nach Anspruch 1, dadurch gekennzeichnet, daß ein Teil jeder optischen Faser in der Nähe der jeweiligen Abschrägung einstückig mit einem länglichen Träger (2) ist, der der jeweiligen Lageanordnungseinrichtung zugeordnet ist, um diese Träger in der ersten Grenzstellung zueinander in Längsrichtung auszurichten, wobei der eine dieser Träger an einer Querachse (4) angelenkt ist, die von dem, dem anderen Träger benachbarten Ende entfernt liegt, und wobei elastische Rückführeinrichtungen (10) dem angelenkten Träger (2) zugeordnet sind, um ihn stets in eine der Grenzstellungen zurückzuführen.

FIG. 1

FIG. 2

FIG. 3

1